(19) Europäisches Patentamt
European Patent Office
Office européen des brevets

(11) Veröffentlichungsnummer : **0 097 222**
**B1**

(12) # EUROPÄISCHE PATENTSCHRIFT

(45) Veröffentlichungstag der Patentschrift : **29.07.87**

(51) Int. Cl.⁴ : **B 62 D 25/08**

(21) Anmeldenummer : **83102179.5**

(22) Anmeldetag : **05.03.83**

(54) **Aufbau für Kraftfahrzeuge, insbesondere Personenkraftwagen.**

(30) Priorität : **22.06.82 DE 3223156**

(43) Veröffentlichungstag der Anmeldung : **04.01.84 Patentblatt 84/01**

(45) Bekanntmachung des Hinweises auf die Patenterteilung : **29.07.87 Patentblatt 87/31**

(84) Benannte Vertragsstaaten : **DE FR GB IT**

(56) *Entgegenhaltungen :*
**DE-A- 2 043 524**
**DE-A- 2 625 724**
**DE-A- 2 725 083**
**DE-A- 2 845 548**
**DE-B- 1 680 029**
**DE-C- 891 505**
**GB-A- 2 090 795**
**SE-A- 8 008 208**

(73) Patentinhaber : **Dr.Ing.h.c. F. Porsche Aktiengesellschaft**
**Porschestrasse 42**
**D-7000 Stuttgart 40 (DE)**

(72) Erfinder : **Rispeter, Siegfried**
**Uhlandstrasse 13**
**D-7122 Besigheim (DE)**
Erfinder : **Schneider, Diethelm, Dipl.-Ing.**
**Robert-Koch-Strasse 15**
**D-7250 Leonberg (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 097 222 B1

**Beschreibung**

Die Erfindung bezieht sich auf einen Aufbau für Kraftfahrzeuge, insbesondere Personenkraftwagen, dessen Endbereich ein aus Quer- und Längsträgern gebildetes Tragsystem aufweist, das mittels einer lösbare Elemente aufweisenden Aufnahmevorrichtung an einer Begrenzungswand einer Fahrgastzelle gehalten ist.

Aus der SE-A 8 008 208 geht ein vorderer Endbereich einer Kraftfahrzeugkarosserie hervor, der ein zur Aufnahme von Stößen ausgelegtes, aus Quer- und Längsträgern gebildetes Tragsystem aufweist. Ein unterer Teilrahmen dieses Tragsystems ist unter Zwischenschaltung von lösbaren Elementen am Tragsystem befestigt, wogegen das Tragsystem selbst fest mit angrenzenden Karosseriepfosten verbunden ist.

Mit dieser Anordnung wird eine gute Krafteinleitung vom Endbereich in die Trägerstruktur der Fahrgastzelle erreicht. Nachteilig an dieser Anordnung ist jedoch, daß ein durch einen Unfallstoß beschädigtes Tragsystem nur durch aufwendige Maßnahmen wieder von der Trägerstruktur der Fahrgastzelle getrennt und durch ein neues Tragsystem ersetzt werden kann, wodurch für die Instandsetzung hohe Kosten entstehen.

Bei einer anderen bekannten Anordnung (DE-C-891 505) ist das Tragsystem an einer den Fahrgastraum begrenzenden Wand vorgesehen. Dieser Ausführung haftet der Nachteil an, daß eine ungünstige Krafteinleitung vom Tragsystem des Endbereichs in die Fahrgastzelle erfolgt, da die Aufnahmevorrichtung lediglich an der nicht abgestützten Fahrzeugquerwand angebracht ist. Bei einem in Fahrzeuglängsrichtung wirkenden Unfallstoß wird nicht nur die lösbare Endeinheit beschädigt, sondern auch Bauteile der Fahrgastzelle, so daß auch hier für die Instandsetzung hohe Kosten entstehen.

Bei der DE-AS-16 80 029 sind schließlich zur Aufnahme eines Endbereiches beiderseits einer Mittellängsebene Vorrichtungen vorgesehen. Diese sind zwar an eine die Fahrgastzelle begrenzende Wand angeschlossen, jedoch ohne den Verlauf der Trägerstruktur in der Fahrgastzelle zu berücksichtigen.

Aufgabe der Erfindung ist es, einen Aufbau für ein Kraftfahrzeug zu schaffen, dessen Endbereich über lösbare Elemente mit der Fahrgastzelle verbunden ist, dergestalt, daß eine gute Krafteinleitung vom Endbereich in die Trägerstruktur der Fahrgastzelle erfolgt. Ferner soll der durch einen Unfallstoß beschädigte Endbereich schnell und kostengünstig ersetzt werden können.

Erfindungsgemäß wird diese Aufgabe durch die kennzeichnenden Merkmale des Anspruchs 1 gelöst. Weitere, die Erfindung in vorteilhafter Weise ausgestaltenden Merkmale enthalten die Unteransprüche.

Die mit der Erfindung hauptsächlich erzielten Vorteile sind darin zu sehen, daß durch die unmittelbare Angliederung der Aufnahmevorrichtungen an Träger der Fahrgastzelle eine gute Krafteinleitung vom Endbereich über die Aufnahmevorrichtungen in die Trägerstruktur der Fahrgastzelle erzielt wird. Eine den im Fahrbetrieb auftretenden Belastungen sicher standhaltende Verbindung zwischen Endbereich und Fahrgastzelle wird dadurch erzielt, daß die Längsträger des Tragsystems mit den Aufnahmevorrichtungen der Fahrgastzelle zusätzlich über Bördelverbindungen verbunden sind. Zudem sind zwischen jedem Längsträger und seiner korrespondierenden Aufnahmevorrichtung zumindest zwei lageversetzte lösbare Elemente vorgesehen. Darüber hinaus wird durch die entkoppelte Angliederung der Stützwand an die Begrenzungswand eine Übertragung von Schwingungen vom Endbereich in die Fahrgastzelle weitgehend reduziert. Außerdem ist im Falle einer Kollision ein schneller und kostengünstiger Austausch des Endbereiches gewährleistet. Nach dem Entfernen der lösbaren Befestigungsmittel werden die Bördelungen des Endbereiches aufgebohrt, wodurch eine einfache Trennung des Endbereiches erzielt wird.

In der Zeichnung ist ein Ausführungsbeispiel der Erfindung dargestellt, das nachstehend näher beschrieben wird.

Es zeigt

Figur 1 einen Vorderwagen eines Kraftfahrzeuges im Grundriß,

Figur 2 eine Teilseitenansicht der Fig. 1 in größerem Maßstab,

Figur 3 eine Teilansicht in Pfeilrichtung X der Fig. 2,

Figur 4 eine Teilansicht in Pfeilrichtung Y der Fig. 2,

Figur 5 eine Teilansicht in Pfeilrichtung Z der Fig. 2,

Figur 6 einen Schnitt nach der Linie VI-VI der Fig. 3 in größerem Maßstab,

Figur 7 eine Einzelheit der Fig. 6 mit einer anderen Ausführungsform.

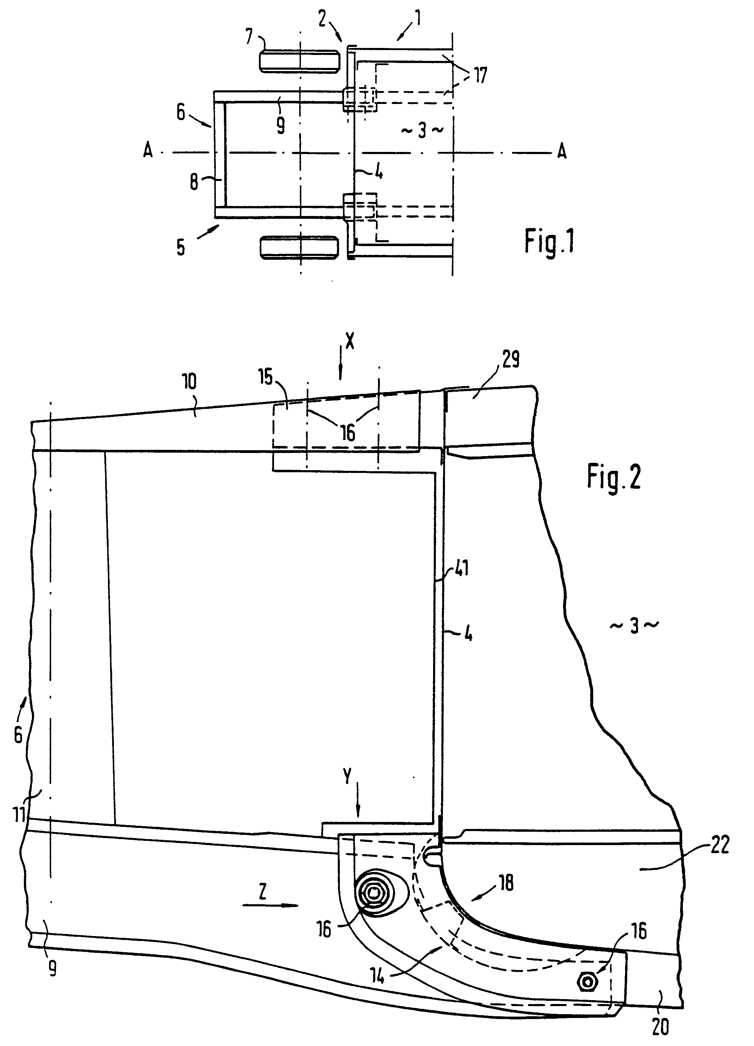

Der in Fig. 1 gezeigte Personenwagen 1 umfaßt einen Aufbau 2 mit einer Fahrgastzelle 3, die über eine Begrenzungswand 4 mit einem Endbereich 5 verbunden ist. Die Begrenzungswand wird gemäß Fig. 2 durch zwei aneinandergesetzte Blechpressteile gebildet, die an gleichlaufenden Flanschen miteinander verschweißt sind.

Im Ausführungsbeispiel wird der Endbereich 5 durch einen Vorderwagen gebildet. Es besteht aber auch die Möglichkeit, dieses Bauprinzip für einen Hinterwagen zu verwenden.

Der Endbereich 5 umfaßt ein Tragsystem 6, an dem einerseits ein nicht dargestellter Stoßfänger und andererseits Räder 7 gehalten sind. Die Räder 7 sind unter Vermittlung von nicht näher gezeigten Radführungsgliedern mit dem Tragsystem 6 verbunden. Das Tragsystem 6 umfaßt Querträger 8, die mit beiderseits einer Mittellängsebene A-A verlaufenden unteren Längsträgern 9 und oberen Längsträgern 10 verbunden sind. Zwischen jedem unteren Längsträger 9 und dem höher angeordneten oberen Längsträger 10 erstreckt sich eine Stützwand 11 (Fig. 1 und 2).

Der untere Längsträger 9 besteht aus zwei Halbschalen 12, 13, die zu einem kastenförmigen Hohlträger zusammengesetzt und durch Schweißen miteinander verbunden sind (Fig. 5). Der Querschnitt des unteren Längsträgers 9 ist vorzugsweise rechteckig, wobei sich die längeren Seiten in senkrechter Richtung erstrecken. Der obere Längsträger 10 ist ebenfalls als kastenförmiger Hohlträger ausgebildet.

Um im Falle einer Kollision eine schnelle und kostengünstige Reparatur des energieabsorbierend ausgebildeten Endbereiches 5 durchführen zu können, sind die Längsträger 9, 10 des Tragsystems 6 lösbar mit der verformungssteif ausgebildeten Fahrgastzelle 3 verbunden. Zu diesem Zweck sind an der der Fahrgastzelle 3 abgekehrten Seite der Begrenzungswand 4 örtlich hohlträgerartig geformte Aufnahmevorrichtungen 14, 15 für die Längsträger 9, 10 vorgesehen (Fig. 2). Die Aufnahmevorrichtungen 14, 15 sind vorzugsweise durch Schweißen mit der Begrenzungswand 4 verbunden. Die Längsträger 9, 10 wirken über Steckverbindungen mit den korrespondierenden Aufnahmevorrichtung 14, 15 zusammen. Im Ausführungsbeispiel wird der untere Längsträger 9 in eine untere Aufnahmevorrichtung 14 eingeschoben ; der obere Längsträger 10 umschließt die obere Aufnahmevorrichtung 15. Die in die Aufnahmevorrichtungen 14 hineinragenden Längsträger 9 sind aus Steifigkeitsgründen endseitig geschlossen.

Zur Fixierung eines jeden Längsträgers an der entsprechenden Aufnahmevorrichtung sind wenigstens zwei lösbare Elemente 16 vorgesehen, die lageversetzt zueinander angeordnet sind. Diese können in Fahrzeuglängsrichtung, in Fahrzeugquerrichttung und in der Höhe versetzt zueinander angeordnet sein. Als lösbare Elemente 16 werden vorzugsweise Spannschrauben oder dgl. verwendet.

Eine gute Krafteinleitung vom Tragsystem 6 über die Aufnahmevorrichtungen 14, 15 in die Fahrgastzelle 3 wird dadurch erzielt, daß jeder Längsträger 9, 10 des Endbereiches 5 unmittelbar an einen Träger einer Trägerstruktur 17 der Fahrgastzelle 3 angegliedert ist.

Die untere Aufnahmevorrichtung 14 ist sowohl an aufrechte als auch an in Fahrzeuglängsrichtung verlaufende Wandabschnitte der Begrenzungswand 4 angeschlossen, wodurch ein steifer Verbund zwischen Aufnahmevorrichtung 14 und Begrenzungswand 4 entsteht (Fig. 2). Der Übergangsbereich 18 ist im Ausführungsbeispiel bogenförmig ausgebildet ; es besteht jedoch die Möglichkeit, den Übergangsbereich 18 winkelförmig auszubilden.

Die untere Aufnahmevorrichtung 14 weist ein längsgerichtetes, im Querschnitt hohlprofilartig ausgebildetes Stützglied 19 auf, das zur Vorderseite und nach unten hin offen ist (Fig. 5). Das rückwärtige Ende des Stützgliedes 19 ist an einen Längsträger 20 der Fahrgastzelle 3 angeschlossen (Fig. 4).

Eine vorteilhafte Krafteinleitung vom unteren Längsträger 9 in die Trägerstruktur 17 der Fahrgastzelle 3 wird dadurch erzielt, daß die untere Aufnahmevorrichtung 14 über ein Verstärkungsteil 21 mit einem im Abstand zur Aufnahmevorrichtung 14 verlaufenden Längsschweller 22 verbunden ist (Fig. 4). Das Verstärkungsteil 21 bildet zusammen mit der Begrenzungwand 4 einen kastenförmigen Querträger, der seitlich einerseits an das Stützglied 19 und andererseits an den Längsschweller 22 angeschlossen ist.

Zwischen dem bogenförmigen Verlauf der Begrenzungswand 4 und dem Verstärkungsteil 21 sind örtlich hutprofilartige Verstärkungen 23 vorgesehen. Diese Verstärkungen 23 stützen sich über Flansche an der Begrenzungswand 4 und am Verstärkungsteil 21 ab (Fig. 4 u. 5). Desweiteren ist zwischen der Begrenzungswand 4 und dem Verstärkungsteil 21 ein topfförmiges Element 24 angeordnet, das zur Wagenheberaufnahme dient. Zur Versteifung der Aufnahmevorrichtung 14 ist an der dem Verstärkungsteil 21 gegenüberliegenden Seite des Stützgliedes 19 ein weiterer kastenförmiger Träger vorgesehen, der durch ein, am Stützglied 19 und an der Begrenzungswand 4 befestigtes Schließblech 25 gebildet wird.

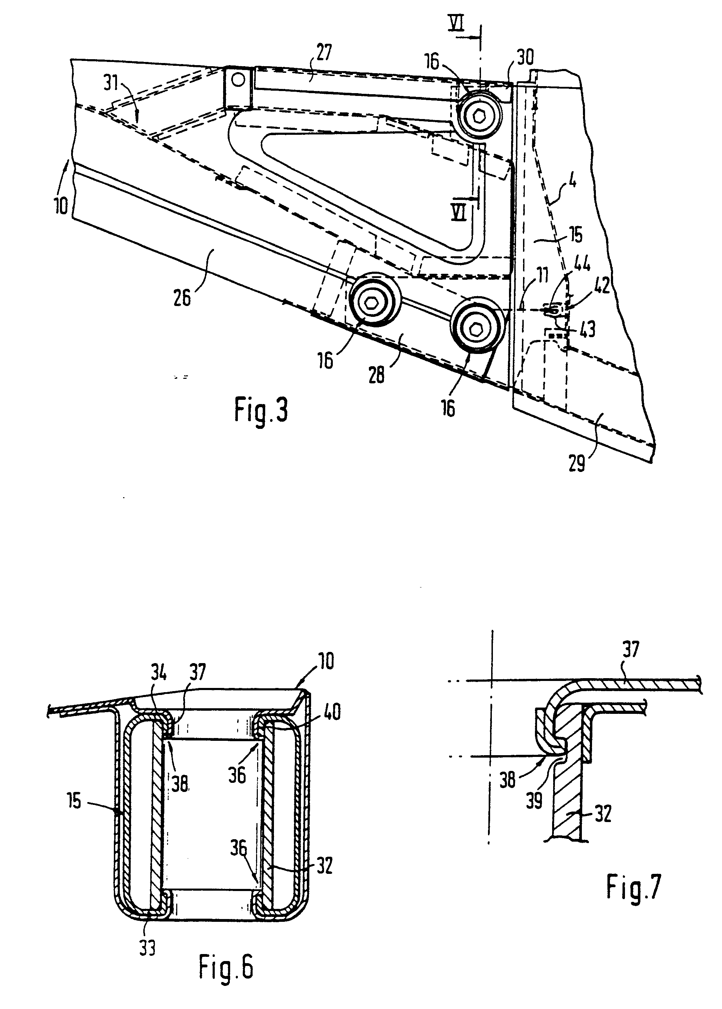

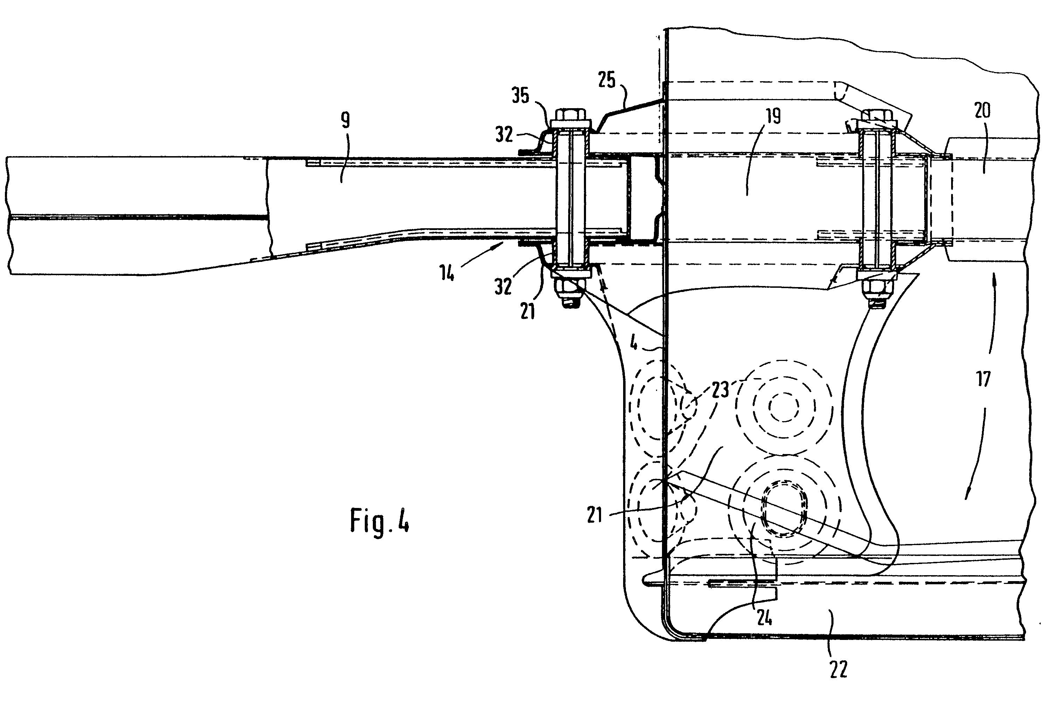

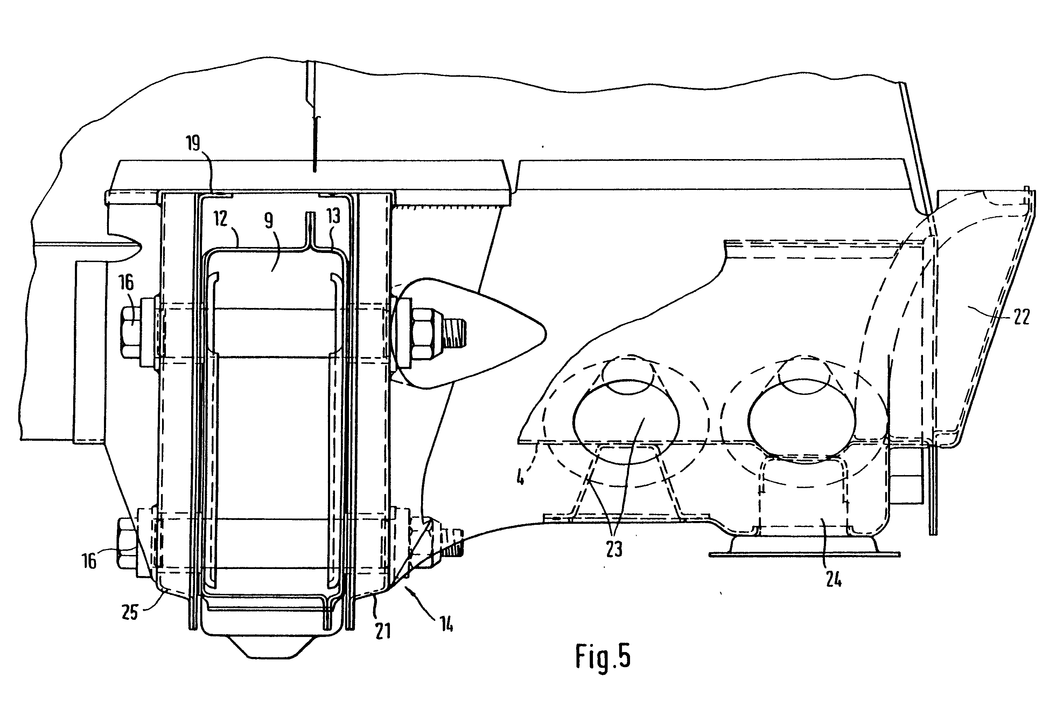

Der obere Längsträger 10 weist in Fahrzeugquerrichtung gesehen im Bereich seiner Aufnahmevorrichtung 15 gabelartig angeordnete Trägerabschnitte 26, 27 auf (Fig. 3). Ein Trägerabschnitt 26 des Längsträgers 10 verläuft dabei schräg nach außen und ist über einen Stützarm 28 der Aufnahmevorrichtung 15 mit einem dahinterliegenden Rahmenträger 29 der Fahrgastzelle 3 verbunden. Der andere Trägerabschnitt 27 verläuft etwa parallel zur Mittellängsebene A-A, wobei sein eines Ende mit einem weiteren Stützarm 30 der Aufnahmevorrichtung 15 verbunden ist. Das andere Ende des Trägerabschnittes 27 mündet bei 31 seitlich in den Trägerabschnitt 26 ein. Durch den vom oberen Längsträger 10 und der oberen Aufnahmevorrichtung 15 gebildeten dreieckförmigen Trägerverband wird eine günstige Kraftverteilung erzielt.

Im Bereich der lösbaren Elemente 16 sind an den Aufnahmevorrichtungen 14, 15 Lagerhülsen 32 angeordnet (Fig. 4 und 6). Bei der oberen Aufnahmevorrichtung 15 weist jeder Befestigungspunkt eine Lagerhülse 32 auf. Diese erstreckt sich zwischen gegenüberliegenden Wandungen 33, 34 der Aufnahmevorrichtung 15. Die Lagerhülse 32 ist mit den Wandungen 33, 34 entweder durch Schweissen oder durch Bördeln verbunden (Fig. 6).

Demgegenüber sind an den unteren Aufnahmevorrichtungen 14 an jedem Befestigungspunkt zwei mit Abstand zueinander angeangeordnete, koaxiale Lagerhülsen 32 vorgesehen, die sich beiderseits des Stützgliedes 19 erstrecken (Fig. 4). Die Lagerhülsen 32 sind an seitlichen Wandungen des Stützgliedes 19 und am Verstärkungsteil 21 bzw. am Schließblech 25 befestigt. Die Lagerhülsen 32 sind an den unteren Aufnahmevorrichtungen 14 im Auflagebereich des lösbaren Elemente 16 vorzugsweise mit einem Bund 35 versehen (Fig. 4).

Eine zusätzliche Verbesserung der Verbindung zwischen Endbereich 5 und Fahrgastzelle 3 wird dadurch erzielt, daß die Längsträger 9, 10 mit den Aufnahmevorrichtungen 14, 15 im Bereich der lösbaren Elemente 16 zusätzlich über eine Bördelverbindung 36 verbunden sind (Fig. 6). Die Bördelverbindung 36 wird durch umgebogene Wandabschnitte 37 der Längsträger 9, 10 gebildet, die sich an endseitig an den Lagerhülsen 32 vorgesehenen Absätzen 38 abstützen und somit eine formschlüssige Verbindung bewirken. Die Absätze 38 werden gemäß Fig. 7 durch örtlich angeordnete Einkerbungen 39 gebildet. In Fig. 6 sind die Absätze durch umgebördelte Flansche 40 der Aufnahmevorrichtungen 15 dargestellt.

Um ein Übertragen der Schwingungen vom Endbereich 5 in die Fahrgastzelle 3 zu vermeiden, ist das Tragsystem 6 des Endbereiches 5 lediglich an den unteren Längsträgern 9 und an den oberen Längsträgern 10 direkt mit der Begrenzungswand 4 verbunden. Im dazwischenliegenden Bereich hingegen verläuft die Stützwandung 11 mit Abstand zur Begrenzungswand 4. In den hierdurch entstehenden Spalt 41 ist ein unter Vorspannung stehender Dichtkörper 42 eingesetzt. Der Dichtkörper 42 wird mittels eines Klemmprofiles 43 am Rand 44 der Stützwand 11 gehalten (Fig. 2 und 3).

Der Zusammenbau von Endbereich 5 und Fahrgastzelle 3 erfolgt in der Weise, daß zuerst die beiden oberen Längsträger 10 über die oberen Aufnahmevorrichtungen 15 geschoben werden, wobei gleichzeitig ein Einschieben der unteren Längsträger 9 in die Aufnahmevorrichtungen 14 erfolgt. Sodann werden die Wandungen der Längsträger 9, 10 im Bereich der lösbaren Elemente 16 mit Bohrungen versehen, die einen kleinen Durchmesser aufweisen und die zum Einführen von Bördelwerkzeugen dienen. Nach der Fertigstellung der Bördelverbindungen 36 werden schließlich die lösbaren Elemente 16 in die Lagerhülsen 32 eingesetzt.

Bei einer durch einen Unfallstoß bedingten Reparatur des Endbereiches 5 werden zuerst die lösbaren Elemente 16 entfernt. Dann werden die Bördelverbindungen 36 aufgebohrt, wordurch der Endbereich 5 auf einfache Art von der Fahrgastzelle 3 getrennt wird. Dabei werden die Aufnahmevorrichtungen 14, 15 der Fahrgastzelle 3 und die Lagerhülsen 32 nicht beschädigt. Anschliessend erfolgt das Einsetzen eines neuen Endbereiches 5 in der oben beschriebenen Reihenfolge.

### Patentansprüche

1. Aufbau für Kraftfahrzeuge, insbesondere Personenkraftwagen, dessen Endbereich ein aus Quer- und Längsträgern gebildetes Tragsystem aufweist, das mittels einer lösbäre Elemente aufweisenden Aufnahmevorrichtung an einer Begrenzungswand einer Fahrgastzelle gehalten ist, dadurch gekennzeichnet, daß an der Begrenzungswand (4) hohlträgerartig ausgebildete Aufnahmevorrichtungen (14, 15) für einen oberen Längsträger (10) und einen unteren Längsträger (9) des Tragsystems (6) angeordnet sind, wobei die Längsträger (9, 10) durch weitere Träger einer Trägerstruktur (17) der Fahrgastzelle (13) fortgeführt sind und die Längsträger (9, 10) mit den Aufnahmevorrichtungen (14, 15) im Bereich der lösbaren Elemente (16) zusätzlich über Bördelverbindungen (36) in Lage gehalten sind.

2. Aufbau nach Anspruch 1, dadurch gekennzeichnet, daß jeder untere Längsträger (9) über die Aufnahmevorrichtung (14) an einen Längsträger (20) der Fahrgastzelle (13) angeschlossen und über einen, durch die Begrenzungswand (4) und ein Verstärkungsteil (21) gebildeten, kastenförmigen Querträger mit dem Längsschweller (22) verbunden ist.

3. Aufbau nach Anspruch 1, dadurch gekennzeichnet, daß jeder obere Längsträger (10) im Bereich der Aufnahmevorrichtung (15) gabelförmig angeordnete Trägerabschnitte (26, 27) aufweist, wobei wenigstens der Trägerabschnitt (26) an einen Rahmenträger (29) der Fahrgastzelle (13) angeschlossen ist.

4. Aufbau nach Anspruch 1, dadurch gekennzeichnet, daß jede Aufnahmevorrichtung (14, 15) wenigstens zwei lösbare Elemente (16) unfaßt, die lageversetzt zueinander angeordnet sind.

5. Aufbau nach Anspruch 1, dadurch gekennzeichnet, daß sich zwischen oberen Längsträger (10) und unteren Längsträger (9) des Tragsystems (6) eine Stützwand (11) erstreckt.

6. Aufbau nach den Ansprüchen 1 und 2, dadurch gekennzeichnet, daß die Aufnahmevorrichtung (14) an aufrechte und in Fahrzeuglängsrichtung verlaufende Wandabschnitte der Begrenzungswand (4) angeschlossen ist.

7. Aufbau nach einem oder mehreren der vorangegangenen Ansprüche, dadurch gekennzeichnet, daß die Aufnahmevorrichtung (14) beiderseits des hohlträgerartigen Längsträgers (9) einen kastenförmigen Querschnitt aufweist.

8. Aufbau nach den Ansprüchen 1 und 2, bei dem die Begrenzungswand (4) im unteren Bereich einen bogenförmigen Verlauf aufweist, dadurch gekennzeichnet, daß zwischen dem bogenförmigen Verlauf und dem Verstärkungsteil (21) örtlich Verstärkungen (23) vorgesehen sind.

9. Aufbau nach Anspruch 1, dadurch gekennzeichnet, daß die Aufnahmevorrichtungen (14, 15) im Bereich der lösbaren Elemente (16) Lagerhülsen (32) aufweisen.

10. Aufbau nach den Ansprüchen 1 und 5, dadurch gekennzeichnet, daß zwischen der Stützwand (11) und der Begrenzungswand (4) ein Spalt (41) vorgesehen ist, in den ein elastischer Dichtkörper (42) eingesetzt wird.

### Claims

1. An attachment for motor vehicles, in particular passenger cars, the end region of which comprises a support system which is formed by cross members and side members and which is held on a boundary wall of a passenger area by means of receiving means comprising releasable members, characterized in that receiving means (14, 15) are arranged on the boundary wall (4) and are constructed as hollow sockets for an upper side member (10) and a lower side member (9) of the support system (6), the side members (9, 10) being continued by means of additional supports of a support structure (17) of the passenger area (13) and the side members (9, 10) being additionally held in position with the receiving means (14, 15) in the region of the releasable members (16) by way of flanged-over connections (36).

2. An attachment according to Claim 1, characterized in that each lower side member (9) is joined to a side member (20) of the passenger area (13) by means of the receiving means (14) and is connected to the longitudinal sill (22) by way of a box-like cross member formed by the boundary wall (4) and a reinforcement member (21).

3. An attachment according to Claim 1, characterized in that each upper side member (10) comprises portions (26, 27) arranged in a forked manner in the region of the receiving means (15), at least the portion (26) being joined to a frame member (29) of the passenger area (13).

4. An attachment according to Claim 1, characterized in that each receiving means (14, 15) comprises at least two releasable members (16) are arranged spatially offset relative to one another.

5. An attachment according to Claim 1, characterized in that a supporting wall (11) extends between the upper side member (10) and the lower side member (9) of the support system (6).

6. An attachment according to Claims 1 and 2, characterized in that the receiving means (14) is joined to upright portions of the boundary wall (4) extending in the longitudinal direction of the vehicle.

7. An attachment according to one or more of the preceding Claims, characterized in that the receiving means (14) has a box-like cross-section on both sides of the side member (9) constructed as a hollow socket.

8. An attachment according to Claims 1 and 2, in which the lower region of the boundary wall (4) has a curved shape, characterized in that reinforcements (23) are provided locally between the curved shape and the reinforcement member (21).

9. An attachment according to Claim 1, characterized in that the receiving means (14, 15) comprise bearing sleeves (32) in the region of the releasable members (16).

10. An attachment according to Claims 1 and 5, characterized in that a gap (41), into which a resilient seal (42) is inserted, is provided between the supporting wall (11) and the boundary wall (4).

**Revendications**

1. Carrosserie pour véhicules automobiles, notamment pour voitures à passagers, dont la région d'extrémité comprend un système porteur constitué par des poutres longitudinales et transversales, qui est maintenu par un dispositif récepteur comprenant des éléments amovibles contre une paroi de séparation d'une cellule formant l'habitacle à passagers, caractérisée en ce que des dispositifs récepteurs (14, 15) en forme de poutre creuse et destinés à une poutre longitudinale supérieure (10) et à une poutre longitudinale inférieure (9) du système porteur (6) sont disposés contre la paroi de séparation (4), les poutres longitudinales (9, 10) étant prolongées par d'autres poutres d'une structure de support (17) de la cellule de l'habitacle à passagers (13) et les poutres longitudinales (9, 10) étant en outre maintenues en position avec les dispositifs récepteurs (14, 15) au moyen de liaisons par sertissage (36) dans la région des éléments amovibles (16).

2. Carrosserie selon la revendication 1, caractérisée en ce que chaque poutre longitudinale inférieure (9) est raccordée par un dispositif récepteur (14) à une poutre longitudinale (20) de la cellule de l'habitacle à passagers (13) et est reliée au sommier longitudinal (22) par l'intermédiaire d'une poutre longitudinale en caisson formée par la paroi de séparation (4) et un élément de renforcement (21).

3. Carrosserie selon la revendication 1, caractérisée en ce que chaque poutre longitudinale supérieure (10) comprend dans la région du dispositif récepteur (15) des sections (26, 27) formant une fourche, la section (26) au moins étant raccordée à une poutre de cadre (29) de la cellule de l'habitacle à passagers (13).

4. Carrosserie selon la revendication 1, caractérisée en ce que chaque dispositif récepteur (14, 15) comprend au moins deux éléments amovibles (16) qui sont disposés de façon décalée l'un par rapport à l'autre.

5. Carrosserie selon la revendication 1, caractérisée en ce qu'une paroi d'appui (11) s'étend entre les poutres longitudinales supérieures (10) et les poutres longitudinales inférieures (9) du système porteur (6).

6. Carrosserie selon les revendications 1 et 2, caractérisée en ce que le dispositif récepteur (14) est raccordé à des sections de la paroi de séparation (4) qui sont verticales et disposées en direction longitudinale du véhicule.

7. Carrosserie selon une ou plusieurs des revendications précédentes, caractérisée en ce que le dispositif récepteur (14) présente une section en forme de caisson de chaque côté de la poutre longitudinale en forme de poutre creuse (9).

8. Carrosserie selon les revendications 1 et 2, dans laquelle la paroi de séparation (4) a une forme courbe dans sa partie inférieure, caractérisée en ce que des éléments de renforcement locaux (23) sont prévus entre la partie courbe et l'élément de renforcement (21).

9. Carrosserie selon la revendication 1, caractérisée en ce que les dispositifs récepteurs (14, 15) comprennent des douilles de support (32) dans la région des éléments amovibles (16).

10. Carrosserie selon les revendications 1 et 5, caractérisée en ce qu'un interstice (41) est prévu entre la paroi d'appui (11) et la paroi de séparation (4), dans lequel est introduite une garniture d'étanchéité élastique (42).

2
1
7
17
6
9
~ 3 ~
A
A
8
4
5
Fig.1

Fig.2

VI
27
16
30
31
10
4
VI
15
44
11
42
26
43
16
28
16
29

Fig.3

34
37
10
40
38
36
15
36
32
33

Fig.6

37
38
39
32

Fig.7

20
17
19
22
24
23
21
4
25
35
32
32
21
14
9

Fig. 4

22
24
23
4
14
21
13
9
12
19
16
25
16

Fig.5